# EUROPEAN PATENT SPECIFICATION

(11) **EP 1 393 245 B1**
(45) Date of publication and mention of the grant of the patent: **22.03.2006**
(21) Application number: 02727832.4
(22) Date of filing: 03.05.2002
(51) Int. Cl.: G06K 19/07

(54) **COMMUNICATION BETWEEN A TRANSPONDER AND AN INTERROGATOR**
KOMMUNIKATION ZWISCHEN EINEM TRANSPONDER UND EINER ABFRAGEINHEIT
COMMUNICATION ENTRE UN TRANSPONDEUR ET UN INTERROGATEUR

(30) Priority: 03.05.2001 ZA 200103544; 22.06.2001 ZA 200105148; 27.08.2001 ZA 200107041
(43) Date of publication of application: 03.03.2004
(73) Proprietor: IP AND INNOVATION COMPANY HOLDINGS (PROPRIETARY) LIMITED, Brummeria 0184, Pretoria (ZA)
(72) Inventor: SMIT, Hendrik Van Zyl, Navorsdorp, 0184 PRETORIA (ZA)
(74) Representative: Hengelhaupt, Jürgen
(86) International application number: PCT/IB2002/001483
(87) International publication number: WO 2002/091290

(56) References cited:
- EP-A- 0 301 127
- EP-A- 0 982 869
- DE-A- 19 507 721
- US-A- 4 040 053
- US-B1- 6 176 422

## Description

THIS INVENTION relates to a transponder and to a method of transmitting a response signal from a transponder. More particularly it relates to a transponder which includes
an activation circuit responsive to an activation signal and having a power output and
a coding circuit connected to the power output of the activation circuit to produce a code modulated response signal on receipt of the activation signal.

In a transponder system a passive transponder is energised by a continuous wave (CW) radio frequency (RF) signal from an interrogator. The interrogator transmits the CWRF activation signal at a certain frequency and a transponder responds by transmitting a modulated code on the same, or on a different frequency. The interrogator receives the signal and reads the code by demodulating the received signal.

The costs of the transponder may sometimes be derived from the complexity of the circuitry. The distance over which the transponder can communicate with the interrogator may be important in the design of a transponder system. It may therefore be advantageous to provide a transponder of simple design without compromising the effective range over which the transponder can operate.

In US 4,040,053, a transponder system with ensured synchronisation for a railway signalling system, is disclosed. The transponder system includes a transposition and modulator device which comprises a resonant circuit, the frequency of which is swept through a frequency band. In EP 0 301 127, a transponder is disclosed which uses one circuit as an activation circuit and as a response circuit. The transponder of EP 0 301 127 thus communicates in a half duplex mode only and is not capable of full duplex communication. This transponder uses a carrier wave to return a modulated signal to an interrogator, at the same frequency as the carrier wave of the interrogation signal.

According to the invention, there is provided a transponder as defined by claim 1.

The activation circuit may be responsive to an activation signal at a first frequency, and the response circuit may be configured to transmit the code modulated response signal at a second, different frequency. The second frequency may be higher than the first frequency.

The response circuit may be a series coupled inductor/capacitor circuit.

Instead, the response circuit may be a parallel coupled inductor/capacitor circuit.

The coding circuit may be configured to produce a response signal which may be digitally switched.

The coding circuit may be configured to produce a code modulated response signal which includes a plurality of pulses each time the coding circuit is switched to set the response circuit ringing.

The response circuit may be configured to produce a response signal of shorter duration than the activation signal, providing the response signal with a higher power output.

The coding circuit may be configured to produce the coded signal in a plurality of discrete bursts in response to a single activation signal.

The invention extends to a method of transmitting a response signal from a transponder in response to an activation signal received from an interrogator, the method including
powering a coding circuit to produce a code modulated signal; and
ringing a response circuit at its natural frequency with the code modulated signal to transmit the coded signal to the interrogator.

The activation signal may be at a first frequency and the transmitted response signal may be at a second, different frequency. The second frequency may be higher than the first frequency.

The modulated signal may be produced in bursts.

The coding circuit may be digitally switched to produce the code modulated signal and the code modulated signal may include a plurality of pulses corresponding to each switching of the coding circuit.

The invention is now described, by way of example only, with reference to the accompanying diagrammatic drawings.

In the drawings
Figures 1 to 4 show circuit diagrams of different embodiments of transponders, in accordance with the invention;
Figure 5 shows a circuit diagram of a transponder;
Figures 6 to 10 show timing diagrams of selected signals in the circuit shown in Figure 1;
Figure 11 shows a layout of an activation coil and a response coil of the circuits shown in Figures 1 to 4; and
Figure 12 shows a circuit diagram of a typical interrogator.

In the figures, reference numeral 10 generally indicates a transponder in accordance with the invention.

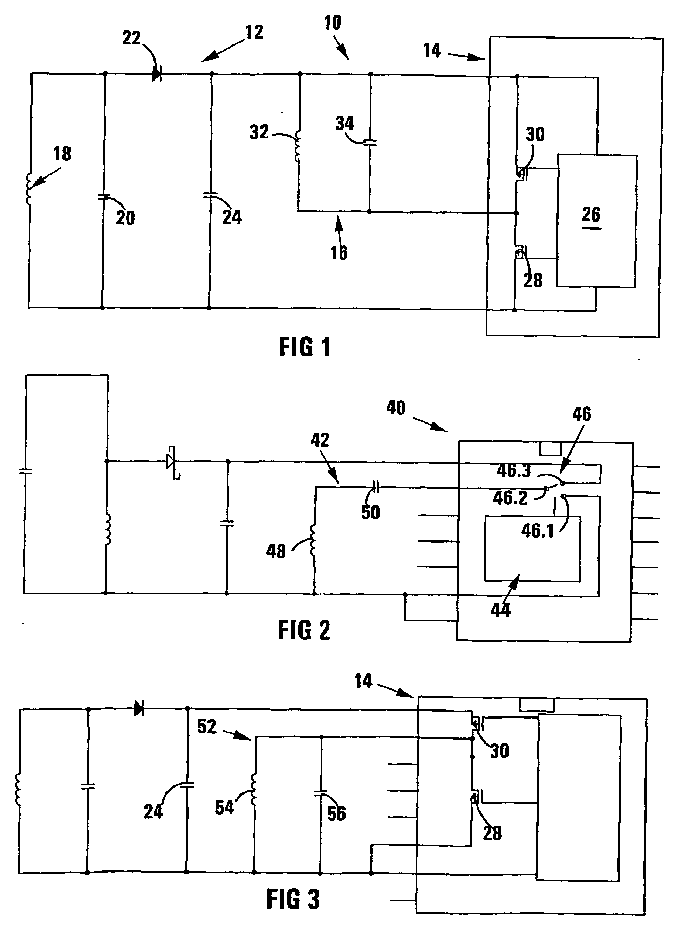

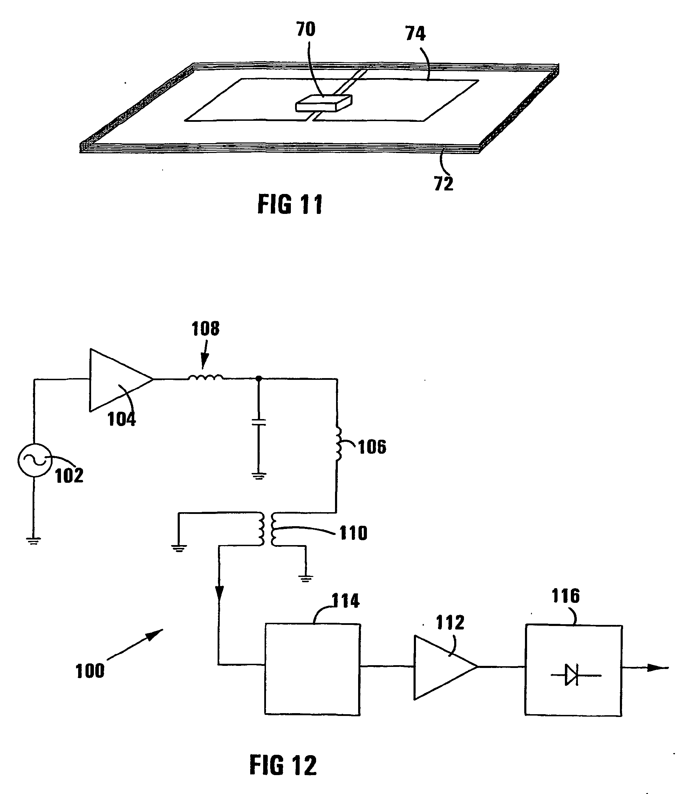

The transponder 10 shown in Figure 1 includes an activation circuit 12, a coding circuit 14, and a response circuit 16. The activation circuit 12 includes of an activation coil 18 (an inductor), a tuned capacitor 20, a diode 22 and a power capacitor 24. The activation coil 18 is connected in parallel with the capacitor 20, which is tuned to be responsive to an activation signal transmitted by an interrogator 100 (shown in Figure 12).

The anode of the diode 22 is connected to the one side of the parallel coupled activation coil 18 and capacitor 20 and the cathode of the diode 22 is connected to an electrode of the power capacitor 24, of which the other electrode is connected to the other side of the parallel coupled activation coil 18 and capacitor 20.

The coil 18 and capacitor 20 combination is responsive to an activation signal of 125 KHz. In operation the activation signal induces a signal at 125 KHz in the coil 18 and capacitor 20 combination, which is half wave rectified by the diode 22 to charge the power capacitor 24. The power output from the power capacitor 24 is used to supply power to the coding circuit 14 and the response circuit 16.

The response circuit 16 is a resonant circuit which consists of a response coil 32 connected in parallel to a tuned capacitor 34. The parallel coupled response circuit 16 is coupled between the power output of the activation circuit 12 and a modulation output of the coding circuit 14.

When the voltage over the power capacitor 24 reaches the activation supply voltage of the coding circuit 14, a coding unit 26 in the coding circuit 14 starts to modulate a unique code on the response circuit 16 by switching two three-terminal depletion-type insulated-gate field-effect (IGFET) transistors 28 and 30 which are integral with the coding circuit 14. In this embodiment the coding unit 26 encodes the unique code by using a bi-phase pulse code modulation (PCM) technique such as "Glitch mode", "Manchester code", or the like. In this example, Glitch mode is used. By switching the transistor 28 on for approximately ten percent of the period of the natural frequency of the response circuit 16, and off, the response circuit 16 starts to ring at its resonance frequency. The full code is generated by repeatedly switching the transistor 28 on and off. The ringing frequency can be anything in the order of 2 to 10 MHz. Ringing continues until it is switched off by switching the transistor 30 on. The ringing frequency is higher than the 125 KHz frequency of the activation signal thereby reducing interference between the two signals.

Depending on the duration of the ringing of the response circuit 16 the transistor 30 may be omitted if the ringing will be sufficiently decayed by the time when the transistor 30, if present, is switched on.

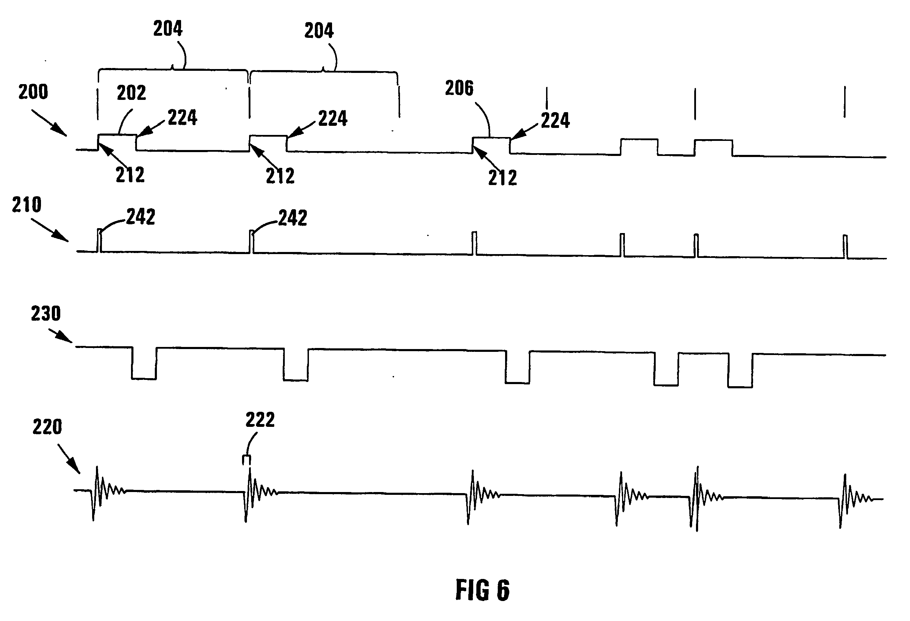

Figure 6 shows some of the signals in the circuit shown in Figure 1.

Signal 200 is the binary code to be encoded, of the value "00110". As can be seen when a "0" 202 is to be encoded a digital switching of the transistor 28 is performed in the first quarter of a pulse period 204. When a "1" 206 is to be encoded a digital switching of the transistor 28 is performed in the third quarter of the pulse period 204.
Signal 210 indicates the signal on the gate of the transistor 28. The coding unit 26 generates a short pulse on the rising edge 212 of the switching. The pulses shown in the signal 210 causes the response circuit 16 to ring, as can be seen in the signal 220. The period 222 of the ringing signal corresponds to the natural frequency of the LC combination of the coil 32 and the capacitor 34.

As seen in the signal 220 the falling edge 224 of the switching, switches on the transistor 30 (seen in the signal 230) and terminates the ringing.

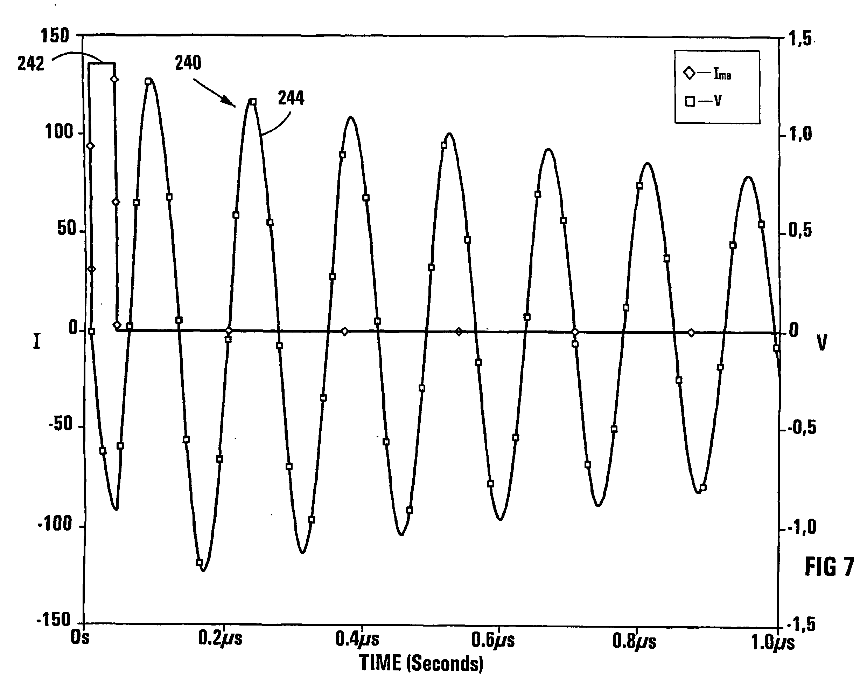

The switching of the coding unit 26 is also illustrated in Figure 7 and indicated by reference numeral 242, where it is shown with a ringing signal 244 in the response circuit 16 in a combined timing diagram 240 The switching 242 causes to response circuit 16 to ring, but the ringing signal 244 decays over time. The initial amplitude of the signal 244 is shown as about 130 mA.

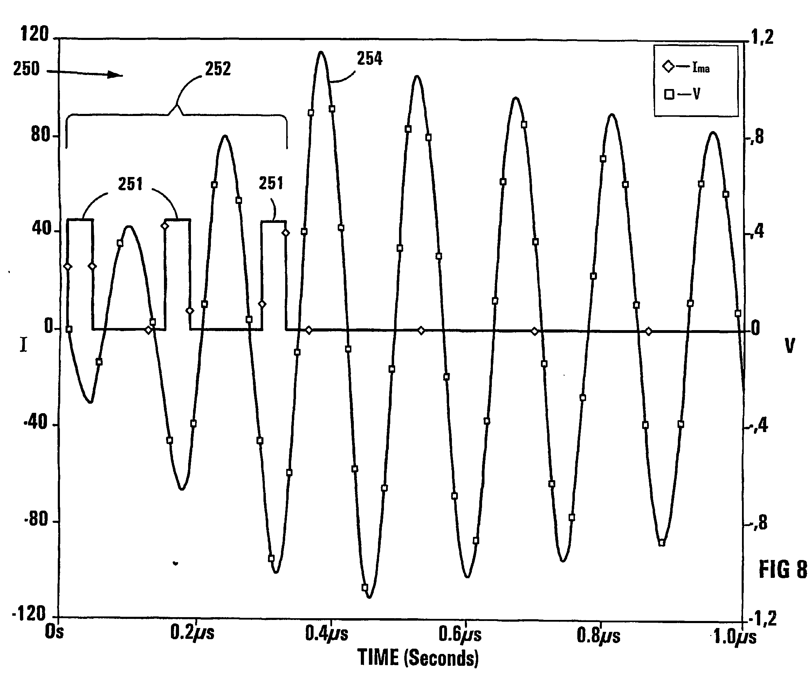

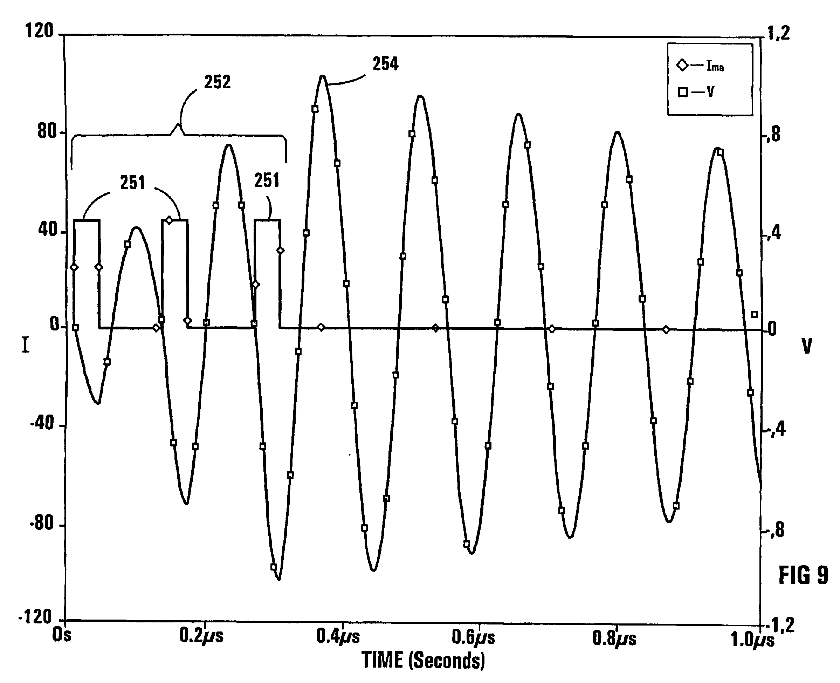

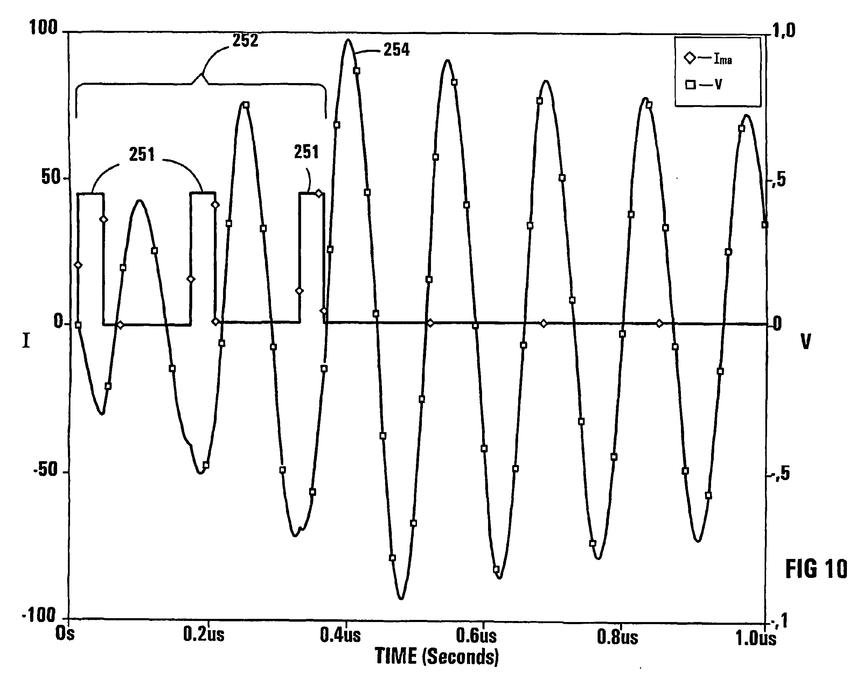

An alternative way of generating the code modulated response signal is shown in Figure 8 in a combined timing diagram 250. Each of three pulses 251 in a switching sequence 252 enhances the ringing in the response circuit 16. Figure 9 and 10 indicates the effect of the series of pulses 251, having a shorter period than the response circuit 16 (Figure 9), or a longer period than the response circuit 16 (Figure 10). It was found that a tolerance of 10% in the accuracy of the period of the switching signal only reduced the amplitude by about 10 % of the ringing signal 254 with a Q value of about 40, where Q is the frequency over the bandwidth.

An alternative transponder is shown in Figure 2 having a coding circuit 40 connected to a response circuit 42 which includes a response coil 48 coupled in series to a tuned response capacitor 50. The coding circuit 40 has a coding unit 44 capable of switching a modulation switch 46 between the supply voltage and ground. The switch 46 is normally switched to the supply voltage thereby charging the capacitor 50 to the supply voltage. Switching the modulation switch 46 to the ground causes the ringing of the response circuit 42. If the internal resistance between a ground terminal 46.1 and a modulation terminal 46.2 is smaller than the internal resistance between a supply terminal 46.3 and a modulation terminal 46.2, it will cause the ring of the response circuit 42 to run for a longer duration as well as a larger amplitude when switched to ground than when it is switched to the supply voltage. The effect of the larger and longer ringing is that the transmission of the code when 46.3 switches will cause little interference in decoding.

In Figure 3 the coding circuit 14 is the same as the coding circuit in Figure 1 but a response circuit 52 differs from the response circuit 16 shown in Figure 1 in that a response coil 54 and a tuned capacitor 56 are connected in parallel between the modulation output of the coding circuit 14 and ground. In this circuit the transistor 28 is normally switched on and the transistor 30 is switched off during the charging cycle of the capacitor 24. By switching the transistor 28 off and the transistor 30 on for approximately ten percent of the period of the response circuit 52 the response coil 54 and the tuned capacitor 56 start to ring until the ringing is switched off by the transistor 28.

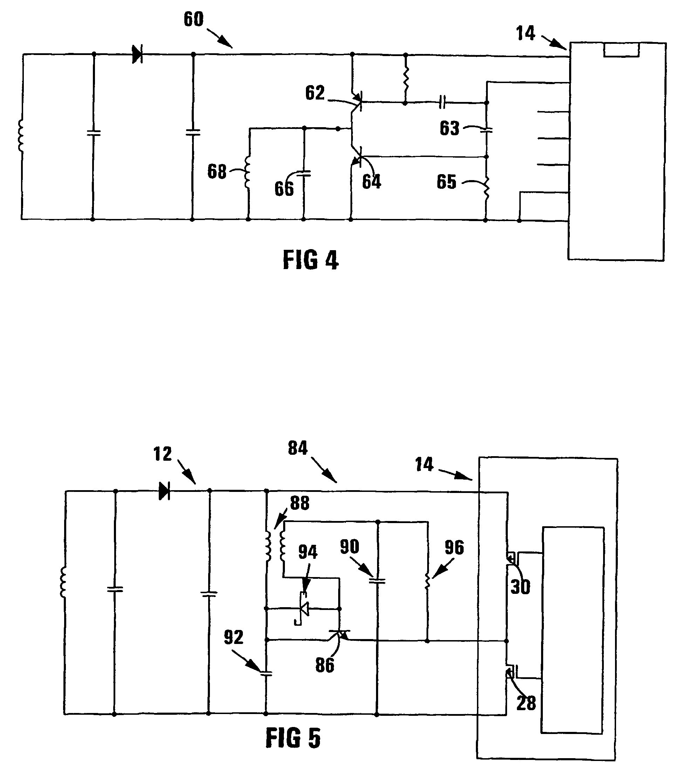

In Figure 4, the coding circuit 14 is the same as the coding circuits shown in Figure 1 and Figure 3, but a response circuit 60 includes two external transistors 62 and 64, as well as other associated circuitry such as a capacitor 63 and a resistor 65. In this embodiment the code is generated by the coding circuit 14 implementing a glitch mode modulation technique. When the modulation output of the coding circuit 14 is switched to ground, the transistor 62 is switched on momentarily thereby charging a tuned capacitor 66 and causing the tuned capacitor 66, coupled in parallel to a response coil 68, to ring. The ringing of the tuned capacitor 66 and the response coil 68 continues until it is switched off by the transistor 64 being switched on momentarily by the modulation output of the coding circuit 14 being switched to the supply voltage. If the ringing of the inductor 68 and the capacitor 66 has sufficiently subsided after 25 % of the code period, then the transistor 64 as well as the capacitor 63 and the resistor 65 may be omitted.

The physical layout of a transponder in accordance with the invention is shown in Figure 11 indicating the position of a portion of the electronic circuitry 70 of the transponder, connected to an activation coil 72 and a response coil 74.

Figure 5 shows a transponder not forming part of the present invention. The transponder of Figure 5 includes an activation circuit 12, which is the same as the activation circuits shown in Figures 1 to 4. The coding circuit 14 is the same as the circuits shown in Figures 1, 3 and 4, but the response circuit 84 is different. The response circuit 84 is driven by the modulation output of the coding circuit 14. The response circuit 84 is an oscillator which includes a transistor 86, a transformer 88, capacitors 90 and 92, a schottky diode 94 and a resistor 96. When the modulation output of the coding circuit 14 is switched to ground by the transistor 28 being switched on, the oscillator starts to run at a preset frequency determined by the values of the components in the circuitry. The coded signal is transmitted by repeatedly switching the oscillator to encode the code of the transponder. The same coding technique as previously described e.g. a PCM Glitch Mode can be used to encode the signal.

An interrogator 100 shown in Figure 12 includes an oscillator 102 driving an amplifier 104 which is connected to a transmission coil 106, via a lowpass filter 108. A pickup transformer 110 is connected in series with the transmission coil 106, its output driving a tuned amplifier 112 through a bandpass filter 114. The frequency of the bandpass filter is matched to the frequency transmitted by the response circuit 16, 42, 52, 60, or 84 of the transponder 10. A unique code which was modulated in the response signal by the coding circuit 14 of the transponder 10 is demodulated by a demodulator 116 to produce the unique code received from the transponder 10 at the output of the demodulator 116. The lowpass filter 108 reduces the transmitter noise in the band in which the transponder responds.

## Claims

1. A transponder (10) which includes
an activation circuit (12) responsive to an activation signal and having a power output (24); and
a coding circuit (14, 40) connected to the power output (24) of the activation circuit (12) to produce a code modulated response signal (242) on receipt of the activation signal,
**characterized in that**
it further includes a response circuit (16, 42, 52, 60), in addition to the activation circuit (12), connected to the coding circuit (14, 40) and configured to transmit the code modulated response signal (242), the response circuit (16, 42, 52, 60) being a resonant circuit comprising a coil (32, 48, 54, 68) and a capacitor (34, 50, 56, 66) and which is capable of ringing at the natural frequency of the response circuit (16, 42, 52, 60).

2. A transponder (10) as claimed in claim 1, **characterized in that** the activation circuit (12) is responsive to an activation signal at a first frequency, and the response circuit (16, 42, 52, 60) is configured to transmit the code modulated response signal (242) at a second, different frequency.

3. A transponder (10) as claimed in claim 2, **characterized in that** the second frequency is higher than the first frequency.

4. A transponder (10) as claimed in any one of the preceding claims, **characterized in that** the response circuit (16, 42, 52, 60) is a series coupled inductor/capacitor circuit.

5. A transponder (10) as claimed in any one of claims 1 to 3 inclusive, **characterized in that** the response circuit (16, 42, 52, 60) is a parallel coupled inductor/capacitor circuit.

6. A transponder (10) as claimed in any one of the preceding claims, **characterized in that** the coding circuit (14, 40) is configured to produce a response signal which is digitally switched.

7. A transponder (10) as claimed in claims 6, **characterized in that** the coding circuit (14, 40) is configured to produce a code modulated response signal which includes a plurality of pulses (251) each time the coding circuit (14, 40) is switched to set the response circuit (16, 42, 52, 60) ringing.

8. A transponder (10) as claimed in any one of the preceding claims, **characterized in that** the response circuit (16, 42, 52, 60) is configured to produce a response signal (220, 244, 254) of shorter duration than the activation signal, providing the response signal (220, 244, 254) with a higher power output.

9. A transponder (10) as claimed in any one of the preceding claims, **characterized in that** the coding circuit (14, 40) is configured to produce the coded signal (242) in a plurality of discrete bursts in response to a single activation signal.

10. A method of transmitting a response signal (220, 244, 254) from a transponder (10) in response to an activation signal received from an interrogator (100), the method including powering a coding circuit (14, 40) to produce a code modulated signal (242), **characterized in that** it includes ringing a response circuit (16, 42, 52, 60) at its natural frequency with the code modulated signal (242) to transmit the coded signal to the interrogator (100).

11. A method as claimed in claim 10, **characterized in that** the activation signal is at a first frequency and the transmitted response signal (220, 244, 254) is at a second, different frequency.

12. A method as claimed in claim 11, **characterized in that** the second frequency is higher than the first frequency.

13. A method as claimed in any one of claims 10 to 12 inclusive, **characterized in that** the modulated signal (242) is produced in bursts.

14. A method as claimed in any one of claims 10 to 13 inclusive, **characterized in that** the coding circuit (14, 40) is digitally switched to produce the code modulated signal and in which the code modulated signal includes a plurality of pulses (251) corresponding to each switching of the coding circuit (14, 40).

## Patentansprüche

1. Ein Transponder (10), welcher
einen Aktivierungskreis (12) enthält, der auf ein Aktivierungssignal anspricht und einen Leistungsausgang (24) aufweist; und
einen Kodierungskreis (14, 40) verbunden mit dem Leistungsausgang (24) des Aktivierungskreises (12) zur Erzeugung eines kodemodulierten Antwortsignals (242) bei Empfang des Aktivierungssignals,
**dadurch gekennzeichnet, dass**
er ferner einen Antwortkreis (16, 42, 52, 60) beinhaltet, zusätzlich zu dem Aktivierungskreis (12), verbunden mit dem Kodierungskreis (14, 40) und konfiguriert für die Übertragung des kodemodulierten Antwortsignals (242), wobei der Antwortkreis (16, 42, 52, 60) ein Resonanzkreis ist, der eine Spule (32, 48, 54, 68) und eine Kondensator (34, 50, 56, 66) umfasst, und welcher dazu im Stande ist, bei der Eigenfrequenz des Antwortkreises (16, 42, 52, 60) zu schwingen.

2. Ein Transponder (10) gemäß Anspruch 1, **dadurch gekennzeichnet, dass** der Aktivierungskreis (12) auf ein Aktivierungssignal einer ersten Frequenz anspricht und der Antwortkreis (16, 42, 52, 60) zur Übertragung eines kodemodulierten Antwortsignals (242) einer zweiten, verschiedenen Frequenz konfiguriert ist.

3. Ein Transponder (10) gemäß Anspruch 2, **dadurch gekennzeichnet, dass** die zweite Frequenz höher ist als die erste Frequenz.

4. Ein Transponder (10) gemäß mindestens einem der vorhergehenden Ansprüche, **dadurch gekennzeichnet, dass** der Antwortkreis (16, 42, 52, 60) ein reihengeschalteter Induktivitäts/Kapazitäts-Kreis ist.

5. Ein Transponder (10) gemäß mindestens einem der Ansprüche 1 bis 3, **dadurch gekennzeichnet, dass** der Antwortkreis (16, 42, 52, 60) ein parallelgeschalteter Induktivitäts/Kapazitäts-Kreis ist.

6. Ein Transponder (10) gemäß mindestens einem der vorhergehenden Ansprüche, **dadurch gekennzeichnet, dass** der Kodierungskreis (14, 40) zur Erzeugung eines Antwortsignals konfiguriert ist, der digital geschaltet wird.

7. Ein Transponder (10) gemäß Anspruch 6, **dadurch gekennzeichnet, dass** der Kodierungskreis (14, 40) zur Erzeugung eines kodemodulierten Antwortsignals konfiguriert ist, welches ein Vielzahl von Pulsen (251) umfasst, jedes Mal, wenn der Kodierungskreis (14, 40) geschaltet wird, um den Antwortkreis (16, 42, 52, 60) zum Schwingen zu bringen.

8. Ein Transponder (10) gemäß mindestens einem der vorhergehenden Ansprüche, **dadurch gekennzeichnet, dass** der Antwortkreis (16, 42, 52, 60) zur Erzeugung eines Antwortsignals (220, 244, 254) von kürzerer Dauer als das Aktivierungssignal konstruiert ist, unter Bereitstellung des Antwortsignals (220, 244, 254) mit einer höheren Ausgangsleistung.

9. Ein Transponder (10) gemäß mindestens einem der vorhergehenden Ansprüche, **dadurch gekennzeichnet, dass** der Kodierungskreis (14, 40) zur Erzeugung des kodierten Signals (242) in einer Vielzahl von diskreten Impulsen in Antwort auf ein einzelnes Aktivierungssignal konstruiert ist.

10. Ein Verfahren zur Übertragung eines Antwortsignals (220, 244, 254) von einem Transponder (10) in Antwort auf ein Aktivierungssignal, erhalten von einer Abfrageeinrichtung (100), wobei das Verfahren eine Versorgung eines Kodierungskreises (14, 40) zur Erzeugung eine kodemodulierten Signals (242) umfasst,
**dadurch gekennzeichnet, dass**
es das Schwingen eines Antwortkreises (16, 42, 52,60) auf seiner Eigenfrequenz umfasst, mit dem kodemodulierten Signal (242) zur Übertragung des kodierten Signals an die Abfrageeinrichtung (100).

11. Ein Verfahren gemäß Anspruch 10, **dadurch gekennzeichnet, dass** das Aktivierungssignal bei einer ersten Frequenz liegt und das übertragene Antwortsignal (220, 244, 254) bei einer zweiten, verschiedenen Frequenz liegt.

12. Ein Verfahren gemäß Anspruch 11, **dadurch gekennzeichnet, dass** die zweite Frequenz höher ist als die erste Frequenz.

13. Ein Verfahren gemäß mindestens einem der Ansprüche 10 bis 12 inklusive, **dadurch gekennzeichnet, dass** das modulierte Signal (242) in Impulsen erzeugt wird.

14. Ein Verfahren gemäß mindestens einem der Ansprüche 10 bis 13 inklusive, **dadurch gekennzeichnet, dass** der Kodierungskreis (14, 40) digital geschaltet wird zur Erzeugung des kodemodulierten Signals und in dem das kodemodulierte Signal eine Vielzahl von Pulsen (251) umfasst, entsprechend jedem Schalten des Kodierungskreises (14, 40).

## Revendications

1. Transpondeur (10) qui comprend :
un circuit d'activation (12) sensible à un signal d'activation et ayant une sortie de puissance (24) ; et,
un circuit de codage (14, 40) connecté à la sortie de puissance (24) du circuit d'activation (12) pour produire un signal de réponse modulé en code (242) à la réception du signal d'activation,
**caractérisé en ce qu'**il comprend, en outre, un circuit de réponse (16, 42, 52, 60), en plus du circuit d'activation (12), connecté au circuit de codage (14, 40) et configuré pour transmettre le signal de réponse modulé en code (242), le circuit de réponse (16, 42, 52, 60) étant un circuit résonant comprenant une bobine (32, 48, 54, 68) et un condensateur (34, 50, 56, 66) et étant capable d'osciller à la fréquence naturelle du circuit de réponse (16, 42, 52, 60) .

2. Transpondeur (10) selon la revendication 1, **caractérisé en ce que** le circuit d'activation (12) est sensible à un signal d'activation à une première fréquence et le circuit de réponse (16, 42, 52, 60) est configuré pour transmettre le signal de réponse modulé en code (242) à une deuxième fréquence différente de la première.

3. Transpondeur (10) selon la revendication 2, **caractérisé en ce que** la deuxième fréquence est supérieure à la première fréquence.

4. Transpondeur (10) selon l'une quelconque des revendications précédentes, **caractérisé en ce que** le circuit de réponse (16, 42, 52, 60) est un circuit inductance/condensateur couplés en série.

5. Transpondeur (10) selon l'une quelconque des revendications 1 à 3, **caractérisé en ce que** le circuit de réponse (16, 42, 52, 60) est un circuit inductance/condensateur couplés en parallèle.

6. Transpondeur (10) selon l'une quelconque des revendications précédentes, **caractérisé en ce que** le circuit de codage (14, 40) est configuré pour produire un signal de réponse qui est commuté numériquement.

7. Transpondeur (10) selon la revendication 6, **caractérisé en ce que** le circuit de codage (14, 40) est configuré pour produire un signal de réponse modulé en code qui comprend une pluralité d'impulsions (251) chaque fois que le circuit de codage (14, 40) est commuté pour établir l'oscillation du circuit de réponse (16, 42, 52, 60).

8. Transpondeur (10) selon l'une quelconque des revendications précédentes, **caractérisé en ce que** le circuit de réponse (16, 42, 52, 60) est configuré pour produire un signal de réponse (220, 244, 254) d'une durée plus courte que le signal d'activation, offrant une sortie de puissance supérieure au signal de réponse (220, 244, 254).

9. Transpondeur (10) selon l'une quelconque des revendications précédentes, **caractérisé en ce que** le circuit de codage (14, 40) est configuré pour produire le signal codé (242) sous la forme d'une pluralité de rafales discrètes en réponse à un seul signal d'activation.

10. Procédé de transmission d'un signal de réponse (220, 244, 254) d'un Transpondeur (10) en réponse à un signal d'activation reçu d'un interrogateur (100), le procédé comprenant l'alimentation d'un circuit de codage (14, 40) pour produire un signal modulé en code (242), **caractérisé en ce qu'**il comprend l'oscillation d'un circuit de réponse (16, 42, 52, 60) à sa fréquence naturelle au moyen du signal modulé en code (242) pour transmettre le signal codé à l'interrogateur (100).

11. Procédé selon la revendication 10, **caractérisé en ce que** le signal d'activation est à une première fréquence et le signal de réponse transmis (220, 244, 254) est à une deuxième fréquence différente de la première.

12. Procédé selon la revendication 11, **caractérisé en ce que** la deuxième fréquence est supérieure à la première fréquence.

13. Procédé selon l'une quelconque des revendications 10 à 12, **caractérisé en ce que** le signal modulé (242) est produit sous la forme de rafales.

14. Procédé selon l'une quelconque des revendications 10 à 13, **caractérisé en ce que** le circuit de codage (14, 40) est commuté numériquement pour produire le signal modulé en code et dans lequel le signal modulé en code comprend une pluralité d'impulsions (251) correspondant à chaque commutation du circuit de codage (14, 40).
